# EUROPEAN PATENT SPECIFICATION

(11) **EP 4 363 314 B1**
(45) Date of publication and mention of the grant of the patent: **06.08.2025**
(21) Application number: 22833815.8
(22) Date of filing: 21.06.2022
(51) Int. Cl.: B64C 13/04, B64C 13/06, B64C 27/00

(54) **A CONTROL MECHANISM**
STEUERMECHANISMUS
MÉCANISME DE COMMANDE

(30) Priority: 29.06.2021 TR 202110608
(43) Date of publication of application: 08.05.2024
(73) Proprietor: Tusas- Turk Havacilik Ve Uzay Sanayii Anonim Sirketi, 06980 Ankara (TR)
(72) Inventor: AKDUMAN, Serhat, 06980 Kahramankazan/Ankara (TR)
(74) Representative: Berkkam, Ayfer
(86) International application number: PCT/TR2022/050623
(87) International publication number: WO 2023/277847

(56) References cited:
- GB-A- 1 353 564
- GB-A- 1 353 564
- GB-A- 1 506 618
- GB-A- 1 506 618
- US-A- 2 206 474
- US-A- 2 206 474
- US-A- 3 332 643
- US-A- 3 332 643
- US-A- 3 839 923
- US-A- 3 839 923

## Description

The present invention relates to control mechanisms located in air vehicles.

Mission equipment is located internally or externally on the console for use in air vehicles. It is provided with an interconnector mechanism so that external control units can be mounted on the console.

The assemblies of the external manual control unit mission equipment used in air and/or space vehicles are fixed on the console in a removable way. In cases where the equipment is assembled in a fixed manner, there is a risk of creating visual and/or physical obstacles to other equipment on the cockpit center console.

US4421287, which is included in the known-state of the art, comprises a helicopter control unit with a display. The manual control unit of helicopter comprises a restraint member to provide the pilot with the feel that he/she is inadvertently moving control unit from its mid-position when the helicopter is on the ground, which may be pivoted from its stowed position into an operable position to change from a safe to an unsafe position for ground personnel. The restraint member comprises an over-center spring, and in use, rests in the mid-position. It is disclosed that if the pilot inadvertently tries to move the control unit forward or laterally from the mid-position, the over-center spring creates resistance against this movement.

Another patent document no. US3332643A discloses a control system for aircraft. Said control system comprises a cyclic handle and a collective handle in order to receive user control inputs.

Another patent document no. US2206474A discloses an airplane control column. Said control column comprises a grip member, a base member, and a cutaway member provided with slots, said base member being movably mounted in said slots.

Another patent document no. GB1506618A discloses a retractable collective pitch control stick for a helicopter. Said stick has telescopic shape and comprises a first portion; a second portion capable of sliding over said first portion; and means for maintaining said portions in a pitch stick maximum length relationship and permitting a minimum length relationship.

Another patent document no. US3839923A discloses a reversible yaw control system for a helicopter. Said system comprises a sensing means responsive to engine torque and to the position of the collective pitch control stick for operating a reversing device disposed between a foot pedal operated input link and a differential collective pitch control output link.

Another patent document no. GB1353564A discloses a pitch control device for helicopters. Said control device comprising control sticks, which are pivotally connected to a torque tube by means of pins; and control sticks, which are connected with each other by a horizontal rod member.

Thanks to a control mechanism according to the present invention, position of the external equipment on the console can be changed by means of an interconnector mechanism after they are used in flight or when they are not required to be used during the flight. Thus, visual and/or physical accessibility of the equipment to the internal equipment and/or other external equipment in the area is ensured.

Another object of the present invention is to provide a generic solution for external mission equipment for use in the consoles of air vehicles by means of the interconnector in the control assembly.

A further object of the present invention is to provide the user with easy access to the internal mission equipment by means of the control mechanism

Yet another object of the present invention is to enable the external mission equipment requested by the user to be mounted on the console in a removable way and to change position thereof by means of the control mechanism.

Still a further object of the present invention is to provide a control mechanism that has a simple, easy to use, practical and effective joint connecting piece.

The control mechanism realized to achieve the object of the present invention, which is defined in the first claim and the other claims dependent thereon, comprises at least one console provided in air vehicles, which has various mission inputs. It comprises at least one control stick which is located on consoles of air vehicles internally and/or externally, enables a user to input various missions, and moved by a hand of the user. The control stick is attached to the console by means of at least one bracket.

The control mechanism of the invention comprises a first position (I) in which the control stick extends outward from the console to approach the pilot, and a second position (II) in which the control stick extends downward from the console away from the pilot. The connecting piece, which is connected to the control stick at one end and to the bracket at the other end, comprises attaching the control stick to the bracket. It comprises at least one connection point on the bracket that allows attachment of the bracket. It comprises at least one channel located on the bracket, which is spaced from the connection point. When the connecting piece slides through the channel with the end thereof contacting the bracket, the control stick moves between the first position and/or the second position (II).

In an embodiment of the invention, the first piece has a cylindrical form, wherein the first piece extends from the part of the connecting piece that connects to the control stick. The second piece, which has a design that extends from the first part by thickening in an eccentric form, is in contact with the bracket of the connecting piece.

In an embodiment of the invention, the control mechanism comprises at least one connecting rod located on the bracket so as to extend outward from the bracket. It comprises two connecting rods which extend parallel from the bracket. Movement of the connecting piece is restrained between these two connecting rods. The connecting rods are attached to the bracket in a removable manner.

In an embodiment of the invention, the control mechanism comprises attaching the connecting piece at the connection point located between the connecting rods. The connection point acts as a center of rotation for the control stick. It comprises at least one connecting pin so that the connecting piece can be connected to the bracket at the connection point.

In an embodiment of the invention, the control mechanism comprises at least one handle extending outwardly from the connecting piece to enable movement of the second piece on the channel for movement of the connecting piece.

In an embodiment of the invention, the control mechanism comprises two spring pin holes located on the channel to enable that the handle attached to the connecting piece is fixed in the first position (I) or second position (II). Thanks to the spring pin hole, the connecting piece can be fixed in the first position (I) or the second position (II).

In an embodiment of the invention, the control mechanism comprises at least one spring pin located in connection with the handle, which, by pulling or compressing, stores energy inside, thereby securing the connecting piece in the spring pin hole.

In an embodiment of the invention, the control mechanism comprises the connecting piece produced in V-form. The first piece and the second piece move in opposite directions. The connecting piece, the first piece and the control stick are enabled to move simultaneously on the same axis.

In an embodiment of the invention, the control mechanism comprises a floor on which the console is located. It comprises the first position (I) in which the control stick moves away from the floor over the console, the second position (II) in which the control stick extends out of the console towards the floor.

In an embodiment of the invention, the control mechanism comprises a rail mechanism removably attached to the console. The rail mechanism, on which the bracket is attached, can be brought closer to or further away from the user according to the user's demand. The control mechanism comprises a third position (III) in which the control stick is closer to the user on the rail mechanism, and a fourth position (IV) in which the control stick is slid from the third position to move away from the user.

In an embodiment of the invention, the control mechanism comprises a control unit to which mission inputs are transferred. The mission input provided to the control stick by the user is transferred to the control unit via the cables passing through the first hollow piece.

In an embodiment of the invention, the control mechanism comprises the control stick used for electro-optical sensor (FLIR) equipment.

In an embodiment of the invention, the control mechanism comprises using the control stick on the console especially for helicopters among air vehicles.

In an embodiment of the invention, the control mechanism comprises the control stick which can be attached to the console after the air vehicle is produced. It comprises the control stick removably attached to console via bracket for external mission input to air vehicle. Since the control stick is removably attached on the console, external missions can be input to the air vehicle.

The control mechanism realized to achieve the object of the present invention is illustrated in the attached drawings, in which:
Figure 1 - is a perspective view of the control mechanism.
Figure 2 - is an exploded view of the control mechanism.
Figure 3 - is an exploded view of the connecting piece.
Figure 4 - is a schematic view of the console and control unit.
Figure 5 - is a perspective view of the connecting rod in the first position (I).
Figure 6 - is a perspective view of the connecting rod in the second position (II).
Figure 7 - is a front view of the connecting rod in the third position (III).
Figure 8 - is a front view of the connecting rod in the fourth position (IV).

All the parts illustrated in figures are individually assigned a reference numeral and the corresponding terms of these numbers are listed below:
1. Control Mechanism
2. Control Stick
3. Bracket
4. Connecting Piece
   401. First Piece
   402. Second Piece
5. Connection Point
   501. Connecting Rod
6. Channel
   601. Spring Pin Hole
7. Connecting pin
8. Handle
9. Spring Pin
10. Rail Mechanism
(C) Console
(K) Control Unit
(Z) Floor
(I) First Position
(II) Second Position
(III) Third Position
(IV) Fourth Position

The control mechanism (1) comprises a console (C) provided in air vehicles; at least one control stick (2) located on the console (C), providing mission input to the air vehicle by the user; at least one bracket (3) allowing the control stick (2) to be attached on the console (C).

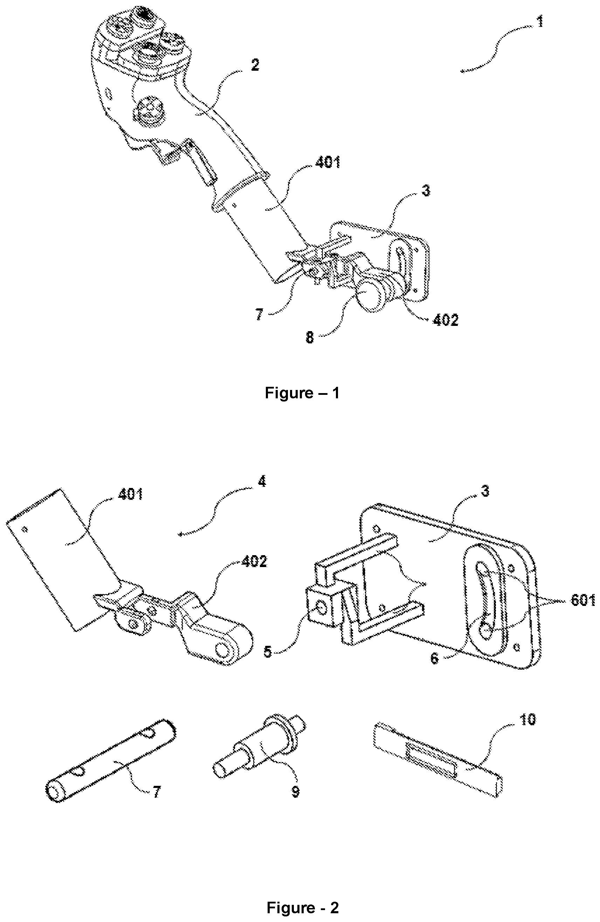

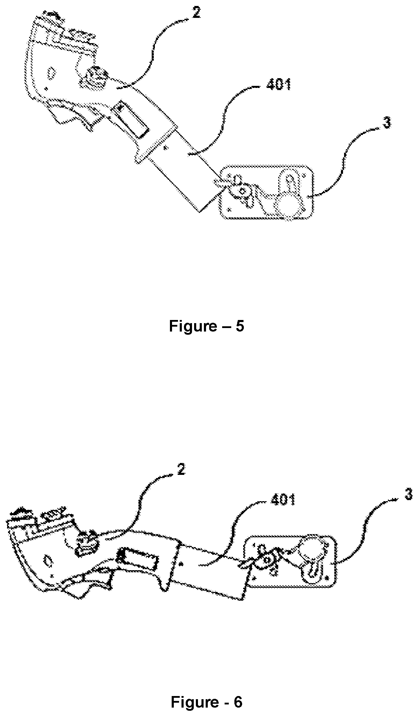

The control mechanism (1) of the invention comprises a first position (I) in which the control stick (2) extends outward from the console (C); a second position (II), wherein the control stick (2) is rotated from the first position (I) so as to be brought into the second position (II); at least one connecting piece (4) connecting the control stick (2) and the bracket (3), with one end connected to the control stick (2) and one end to the bracket (3); at least one connection point (5) which is a center of rotation for the control stick (2), is located on the bracket (3) and allows the connecting piece (4) to be attached to the bracket (3); at least one channel (6) located on the bracket (3) such that a distance is at least partially provided between the channel (6) and the connection point (5), wherein the channel (6) allows the control stick (2) to rotate to be brought to the first position (I) and/or second position (II); the control stick (2) which is moved by sliding the end of the connecting piece (4) contacting the channel (6) within the channel (6), so that the control stick (2) is brought into the first position (I) and/or second position (II) (Figure 1, Figure 5, Figure 6).

At least one console (C) provided in air vehicles and at least one control stick (2) located on the console (C) provide task input to the air vehicle by the user. Thanks to at least one bracket (3) located on the console (C), the control stick (2) can be attached on the console (C).

Thanks to the first position (I) in which the control stick (2) on the console (C) extends outward from the console (C), and to the second position (II) into which the control stick (2) is rotated, the control stick (2) is enabled to change position. Since one end of the connecting piece (4) is connected to the control stick (2) and one end to the bracket (3), the control stick (2) can be attached to the bracket (3). Thanks to the connection point (5) on the bracket (3), the connecting piece (4) is attached to the bracket (3). The connection point (5) provides a center of rotation for the control stick (2). Thanks to at least one channel (6) located on the bracket (3) such that a distance is at least partially provided between the channel (6) and the connection point (5), the control stick (2) is enabled to rotate so as to be brought into the first position (I) and/or the second position (II). As the end of the connecting piece (4) contacting the channel (6) slides within the channel (6), the control stick (2) can be brought into the first position (I) and/or the second position (II).

In an embodiment of the invention, the control mechanism (1) comprises a first piece (401) having a cylindrical form, which connects the connecting piece (4) to the control stick (2); a second piece (402) located on the connecting piece (4) to be integral with the first piece (401), extending eccentrically from the first piece (401) with an inclined and thickened manner, and contacting the bracket (3) on the connecting piece (4). Thanks to the first piece (401) which is the cylindrical end of the connecting piece (4) connected to the control stick (2), and to the second piece (402) extending from the first piece (401) towards the bracket (3), thickening in an eccentric form, the control stick (2) can be attached to the bracket (3).

In an embodiment of the invention, the control mechanism (1) comprises at least one connecting rod (501) extending outward from the bracket (3), which limits the movement of the connecting piece (4) and allows the connecting piece (4) to be removably attached to the bracket (3). Since the connecting rod extends outward from the bracket (3), contacts the connecting piece (4) and limits the movement of the connecting piece (4), the connecting piece (4) can be removably attached to the bracket (3).

In an embodiment of the invention, the control mechanism (1) comprises at least one connecting pin (7), which is a center of rotation for the movement of the control stick (2) and connects the connecting piece (4) and the connecting rod (501) at the connection point (5). Thanks to the connecting pin (7), the connecting piece (4) can be connected through the connection point (5) that couples the parallel connecting rods (501).

In an embodiment of the invention, the control mechanism (1) comprises at least one handle (8) which extends outward from the connecting piece (4) and allows the connecting piece (4) to slide on the channel (6). Thanks to the handle (8), position of the control stick (2) can be changed by the user.

In an embodiment of the invention, the control mechanism (1) comprises at least two spring pin holes (601) located on the channel (6), which allow the connecting piece (4) to be fixed on the first position (I) or the second position (II). Thanks to at least two spring pin holes (601) located as recesses on the channel (6), the connecting piece (4) can be fixed in the first position (I) and/or the second position (II).

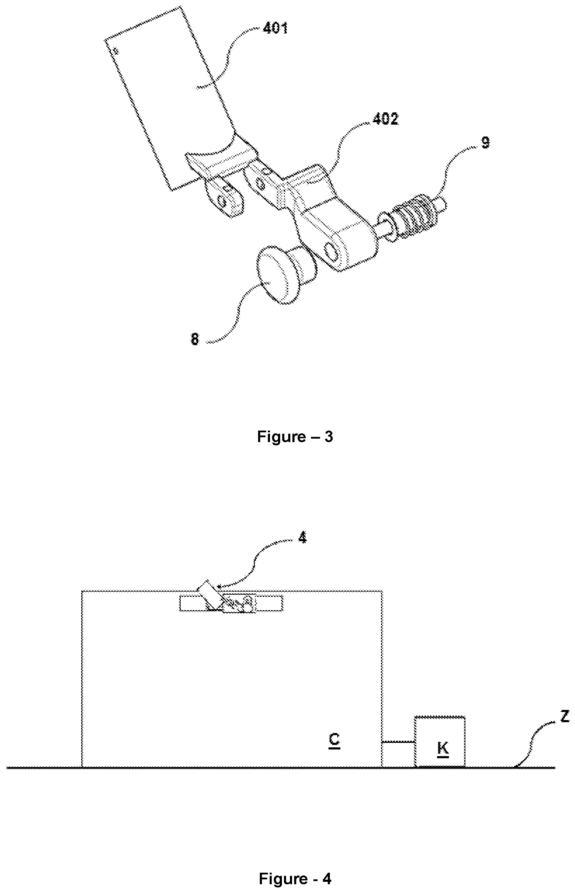

In an embodiment of the invention, the control mechanism (1) comprises at least one spring pin (9) located in connection with the handle (8), which enables the connecting piece (4) to be fixed in the spring pin hole (601) by pulling or compressing. Thanks to the spring pin (9) that stores energy thereon, the connecting piece (4) is enabled to be fixed in any of the spring pin holes (601) when it is pulled and/or compressed (Figure 2, Figure 3).

In an embodiment of the invention, the control mechanism (1) comprises the V-shaped connecting piece (4). Thanks to the V-shaped connecting piece (4), the first piece (401) and the second piece (402) can move in opposite directions.

In an embodiment of the invention, the control mechanism (1) comprises at least one floor (Z) on which the console (C) is located; the first position (I) in which the control stick (2) extends upward from the console (C) relative to the floor (Z); the second position (II) in which the control stick (2) extends downward from the console (C) relative to the floor (Z). thanks to the first position (I) extending outward from the console (C), closer to the user, relative to the floor (Z) and the second position (II) extending downward from the console (C), away from the user, relative to the floor (Z), the control stick (2) can be moved according to the user preferences (Figure 4).

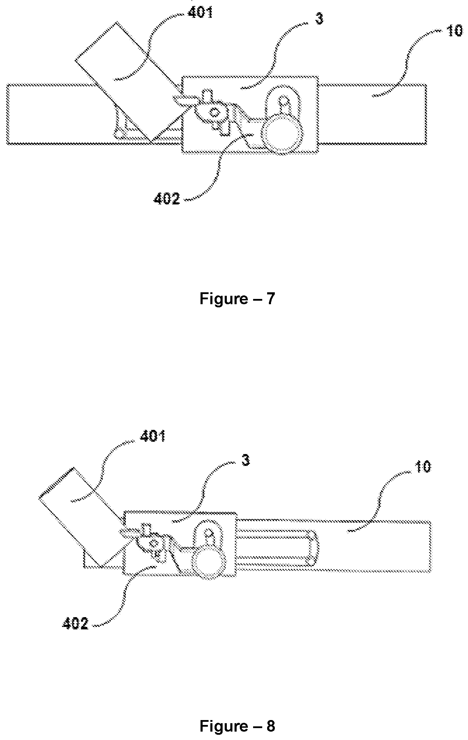

In an embodiment of the invention, the control mechanism (1) comprises at least one rail mechanism (10) on which the bracket (3) is attached, which is located on the console (C) in a removable manner and allows the bracket (3) to move by sliding; a third position (III) in which the control stick (2) is fixed on the rail mechanism (10) closer to the user; a fourth position (IV) in which the control stick (2) moves away from the user by sliding the bracket (3) from the third position (III). Thanks to the rail mechanism (10), the control stick (2) is also able to move on the horizontal axis (Figure 7, Figure 8).

In an embodiment of the invention, the control mechanism (1) comprises at least one control unit (K) to which data is transferred via cables extending from the first piece (401), for the mission input provided to the control stick (2) by the user. It enables the mission inputs to be transmitted from the control stick (2) to the control unit (K) via cables.

In an embodiment of the invention, the control mechanism (1) comprises the control stick (2), which is an electro-optical sensor (FLIR) equipment.

In an embodiment of the invention, the control mechanism (1) comprises the control stick (2) used for the console (C) provided on the helicopter.

In an embodiment of the invention, the control mechanism (1) comprises the bracket (3) which can be attached to the console (C) after the air vehicle is produced, wherein the bracket (3) allows the control stick (2), which is used for external mission input that can consist of different mission equipment, to be attached on the console (C). Thanks to the bracket (3), external use of different mission equipment can be provided.

## Claims

1. A control mechanism (1) comprising a console (C) suitable to be provided in an air vehicle; at least one control stick (2) located on the console (C), suitable to provide mission input to the air vehicle by a user; at least one bracket (3) allowing the control stick (2) to be attached on the console (C); a first position (I) in which the control stick (2) extends outward from the console (C); a second position (II), wherein the control stick (2) is rotated from the first position (I) so as to be brought into the second position (II); at least one connecting piece (4) connecting the control stick (2) and the bracket (3), with one end connected to the control stick (2) and one end to the bracket (3); at least one connection point (5) which is a center of rotation for the control stick (2), is located on the bracket (3) and allows the connecting piece (4) to be attached to the bracket (3), **characterized by** at least one channel (6) located on the bracket (3) such that a distance is at least partially provided between the channel (6) and the connection point (5), wherein the channel (6) allows the control stick (2) to rotate to be brought to the first position (I) and/or second position (II); the control stick (2) which is moved by sliding the end of the connecting piece (4) contacting the channel (6) within the channel (6), so that the control stick (2) is brought into the first position (I) and/or second position (II).

2. A control mechanism (1) according to claim 1, **characterized by** a first piece (401) having a cylindrical form, which connects the connecting piece (4) to the control stick (2); a second piece (402) located on the connecting piece (4) to be integral with the first piece (401), extending eccentrically from the first piece (401) with an inclined and thickened manner, and contacting the bracket (3) on the connecting piece (4).

3. A control mechanism (1) according to claim 1 or claim 2, **characterized by** at least one connecting rod (501) extending outward from the bracket (3), which limits the movement of the connecting piece (4) and allows the connecting piece (4) to be removably attached to the bracket (3).

4. A control mechanism (1) according to claim 3, **characterized by** at least one connecting pin (7), which is a center of rotation for the movement of the control stick (2) and connects the connecting piece (4) and the connecting rod (501) at the connection point (5).

5. A control mechanism (1) according to any of the above claims, **characterized by** at least one handle (8) which extends outward from the connecting piece (4) and allows the connecting piece (4) to slide on the channel (6).

6. A control mechanism (1) according to any of the above claims, **characterized by** at least two spring pin holes (601) located on the channel (6), which allow the connecting piece (4) to be fixed on the first position (I) or the second position (II).

7. A control mechanism (1) according to claim 5, **characterized by** at least one spring pin (9) located in connection with the handle (8), which enables the connecting piece (4) to be fixed in the spring pin hole (601) by pulling or compressing.

8. A control mechanism (1) according to any of the above claims, **characterized by** the V-shaped connecting piece (4).

9. A control mechanism (1) according to any of the above claims, **characterized by** at least one floor (Z) on which the console (C) is located; the first position (I) in which the control stick (2) extends upward from the console (C) relative to the floor (Z); the second position (II) in which the control stick (2) extends downward from the console (C) relative to the floor (Z).

10. A control mechanism (1) according to any of the above claims, **characterized by** at least one rail mechanism (10) on which the bracket (3) is attached, which is located on the console (C) in a removable manner and allows the bracket (3) to move by sliding; a third position (III) in which the control stick (2) is fixed on the rail mechanism (10) closer to the user; a fourth position (IV) in which the control stick (2) moves away from the user by sliding the bracket (3) from the third position (III).

11. A control mechanism (1) according to claim 2, **characterized by** at least one control unit (K) to which data is transferred via cables extending from the first piece (401), for the mission input provided to the control stick (2) by the user.

12. A control mechanism (1) according to any of the above claims, **characterized by** the control stick (2), which is an electro-optical sensor equipment.

13. A control mechanism (1) according to any of the above claims, **characterized by** the control stick (2) used for the console (C) provided on the helicopter.

14. A control mechanism (1) according to any of the above claims, **characterized by** the bracket (3) which can be attached to the console (C) after the air vehicle is produced, wherein the bracket (3) allows the control stick (2), which is used for external mission input that can consist of different mission equipment, to be attached on the console (C).

## Patentansprüche

1. Steuermechanismus (1) mit einer Konsole (C), die in einem Luftfahrzeug vorgesehen werden kann;
mindestens einen Steuerknüppel (2), der sich auf der Konsole (C) befindet und geeignet ist, dem Luftfahrzeug durch einen Benutzer Missions-Eingaben zu liefern; mindestens eine Halterung (3)
eine erste Position (I), in der sich der Steuerknüppel (2) von der Konsole (C) nach außen erstreckt; eine zweite Position (II), in der der Steuerknüppel (2) aus der ersten Position (I) gedreht wird, um in die zweite Position (II) gebracht zu werden; mindestens ein Verbindungsstück (4), das den Steuerknüppel (2) und den Bügel (3) verbindet, wobei ein Ende mit dem Steuerknüppel (2) und ein Ende mit dem Bügel (3) verbunden ist; mindestens einen Verbindungspunkt (5), der ein Drehzentrum für den Steuerknüppel (2) ist, sich an der Halterung (3) befindet und es ermöglicht, das Verbindungsstück (4) an der Halterung (3) zu befestigen, **gekennzeichnet durch** mindestens einen Kanal (6), der sich an der Halterung (3) befindet, so dass zumindest teilweise ein Abstand zwischen dem Kanal (6) und dem Verbindungspunkt (5) vorgesehen ist, wobei der Kanal (6) es ermöglicht, dass sich der Steuerknüppel (2) dreht, um in die erste Position (I) und/oder zweite Position (II) gebracht zu werden; den Steuerknüppel (2), der durch Verschieben des Endes des Verbindungsstücks (4), das den Kanal (6) berührt, innerhalb des Kanals (6) bewegt wird, so dass der Steuerknüppel (2) in die erste Position (I) und/oder zweite Position (II) gebracht wird.

2. Steuermechanismus (1) nach Anspruch 1, **dadurch gekennzeichnet, dass** ein erstes Stück (401) eine zylindrische Form aufweist, das das Verbindungsstück (4) mit dem Steuerknüppel (2) verbindet; ein zweites Stück (402) auf dem Verbindungsstück (4) angeordnet ist, um mit dem ersten Stück (401) einstückig zu sein, sich exzentrisch von dem ersten Stück (401) mit einer geneigten und verdickten Art und Weise erstreckt und die Klammer (3) auf dem Verbindungsstück (4) berührt.

3. Steuermechanismus (1) nach Anspruch 1 oder Anspruch 2, **dadurch gekennzeichnet, dass** sich mindestens eine Verbindungsstange (501) von der Konsole (3) nach außen erstreckt, die die Bewegung des Verbindungsstücks (4) begrenzt und es ermöglicht, das Verbindungsstück (4) abnehmbar an der Konsole (3) zu befestigen.

4. Steuermechanismus (1) nach Anspruch 3, **dadurch gekennzeichnet, dass** mindestens ein Verbindungsbolzen (7), der ein Drehpunkt für die Bewegung des Steuerknüppels (2) ist und das Verbindungsstück (4) und die Verbindungsstange (501) an der Verbindungsstelle (5) verbindet.

5. Steuermechanismus (1) nach einem der vorstehenden Ansprüche, **dadurch gekennzeichnet, dass** er mindestens einen Griff (8) aufweist, der sich von dem Verbindungsstück (4) nach außen erstreckt und ein Gleiten des Verbindungsstücks (4) auf dem Kanal (6) ermöglicht.

6. Steuermechanismus (1) nach einem der vorstehenden Ansprüche, **dadurch gekennzeichnet, dass** sich in der Rinne (6) mindestens zwei Federstiftlöcher (601) befinden, die es ermöglichen, das Verbindungsstück (4) in der ersten Position (I) oder der zweiten Position (II) zu fixieren.

7. Steuermechanismus (1) nach Anspruch 5, **dadurch gekennzeichnet, dass** mindestens ein Federstift (9) in Verbindung mit dem Griff (8) angeordnet ist, der es ermöglicht, das Verbindungsstück (4) durch Ziehen oder Zusammendrücken im Federstiftloch (601) zu fixieren.

8. Steuermechanismus (1) nach einem der vorstehenden Ansprüche, **dadurch gekennzeichnet, dass** das Verbindungsstück (4) V-förmig ist.

9. Steuermechanismus (1) nach einem der vorstehenden Ansprüche, **dadurch gekennzeichnet, dass** mindestens ein Boden (Z) vorhanden ist, auf dem sich die Konsole (C) befindet; dass in der ersten Position (I) der Steuerknüppel (2) von der Konsole (C) relativ zum Boden (Z) nach oben ragt; dass in der zweiten Position (II) der Steuerknüppel (2) von der Konsole (C) relativ zum Boden (Z) nach unten ragt.

10. Steuermechanismus (1) nach einem der vorstehenden Ansprüche, **dadurch gekennzeichnet, dass** mindestens ein Schienenmechanismus (10) vorgesehen ist, an dem der Bügel (3) befestigt ist, der abnehmbar an der Konsole (C) angeordnet ist und eine Verschiebung des Bügels (3) ermöglicht; dass eine dritte Position (III) vorgesehen ist, in der der Steuerknüppel (2) an dem Schienenmechanismus (10) näher am Benutzer befestigt ist; dass eine vierte Position (IV) vorgesehen ist, in der der Steuerknüppel (2) durch Verschieben des Bügels (3) aus der dritten Position (III) vom Benutzer wegbewegt wird.

11. Steuermechanismus (1) nach Anspruch 2, **dadurch gekennzeichnet, dass** mindestens eine Steuereinheit (K) vorhanden ist, an die über Kabel, die vom ersten Teil (401) ausgehen, Daten für die vom Benutzer an den Steuerknüppel (2) gegebene Aufgabe übertragen werden.

12. Steuermechanismus (1) nach einem der vorstehenden Ansprüche, **dadurch gekennzeichnet, dass** der Steuerknüppel (2) eine elektro-optische Sensoreinrichtung ist.

13. Steuermechanismus (1) nach einem der vorstehenden Ansprüche, **dadurch gekennzeichnet, dass** der Steuerknüppel (2) für die am Hubschrauber vorgesehene Konsole (C) verwendet wird.

14. Steuermechanismus (1) nach einem der vorstehenden Ansprüche, **dadurch gekennzeichnet, dass** die Halterung (3) nach der Herstellung des Luftfahrzeugs an der Konsole (C) angebracht werden kann, wobei die Halterung (3) die Anbringung des Steuerknüppels (2) an der Konsole (C) ermöglicht, der zur externen Missionsvorgabe verwendet wird, die aus verschiedenen Missionsausrüstungen bestehen kann.

## Revendications

1. Mécanisme de commande (1) comprenant une console (C) adaptée pour être installée dans un véhicule aérien ;
au moins un manche de commande (2) situé sur la console (C), adaptée pour fournir une entrée de mission au véhicule aérien par un utilisateur ; au moins un support (3) permettant de fixer le manche de commande (2) sur la console (C) ; une première position (I) dans laquelle le manche de commande (2) s'étend vers l'extérieur de la console (C) ; une deuxième position (II), dans laquelle le manche de commande (2) est tourné depuis la première position (I) de manière à être amené dans la deuxième position (II) ; au moins une pièce de connexion (4) reliant le manche de commande (2) et le support (3), avec une extrémité reliée au manche de commande (2) et une extrémité au support (3) ; au moins un point de connexion (5) qui est un centre de rotation pour le manche de commande (2), est situé sur le support (3) et permet de fixer la pièce de connexion (4) au support (3), **caractérisé par** au moins un canal (6) situé sur le support (3) de telle sorte qu'une distance est au moins partiellement prévue entre le canal (6) et le point de connexion (5), le canal (6) permettant au manche de commande (2) de tourner pour être amené à la première position (I) et/ou à la deuxième position (II) ; le manche de commande (2) étant déplacé en faisant coulisser l'extrémité de la pièce de connexion (4) en contact avec le canal (6) à l'intérieur du canal (6), de sorte que le manche de commande (2) est amené dans la première position (I) et/ou la deuxième position (II).

2. Mécanisme de commande (1) selon la revendication 1, **caractérisé par** une première pièce (401) de forme cylindrique reliant la pièce de connexion (4) au manche de commande (2) ; une deuxième pièce (402) située sur la pièce de connexion (4) pour être solidaire de la première pièce (401), s'étendant de manière excentrique à partir de la première pièce (401) de manière inclinée et épaissie, et en contact avec le support (3) sur la pièce de connexion (4).

3. Mécanisme de commande (1) selon la revendication 1 ou la revendication 2, **caractérisé par** au moins une bielle (501) s'étendant vers l'extérieur à partir du support (3), qui limite le mouvement de la pièce de connexion (4) et qui permet à la pièce de connexion (4) d'être fixée de manière amovible au support (3).

4. Mécanisme de commande (1) selon la revendication 3, **caractérisé par** au moins une goupille de connexion (7), qui est un centre de rotation pour le mouvement du manche de commande (2) et qui relie la pièce de connexion (4) et la bielle (501) au point de connexion (5).

5. Mécanisme de commande (1) selon l'une quelconque des revendications précédentes, **caractérisé par** au moins une poignée (8) qui s'étend vers l'extérieur à partir de la pièce de connexion (4) et qui permet à la pièce de connexion (4) de coulisser sur le canal (6).

6. Mécanisme de commande (1) selon l'une quelconque des revendications précédentes, **caractérisé par** au moins deux trous de goupille à ressort (601) situés sur le canal (6), qui permettent de fixer la pièce de connexion (4) sur la première position (I) ou la deuxième position (II).

7. Mécanisme de commande (1) selon la revendication 5, **caractérisé par** au moins une goupille élastique (9) située en liaison avec la poignée (8), qui permet de fixer la pièce de connexion (4) dans le trou de goupille élastique (601) par traction ou compression.

8. Mécanisme de commande (1) selon l'une quelconque des revendications précédentes, **caractérisé par** la pièce de connexion (4) en forme de V.

9. Mécanisme de commande (1) selon l'une quelconque des revendications précédentes, **caractérisé par** au moins un plancher (Z) sur lequel se trouve la console (C) ; la première position (I) dans laquelle le manche de commande (2) s'étend vers le haut à partir de la console (C) par rapport au plancher (Z) ; la deuxième position (II) dans laquelle le manche de commande (2) s'étend vers le bas à partir de la console (C) par rapport au plancher (Z).

10. Mécanisme de commande (1) selon l'une quelconque des revendications précédentes, **caractérisé par** au moins un mécanisme de rail (10) sur lequel est fixé le support (3), qui est situé sur la console (C) de manière amovible et permet au support (3) de se déplacer par coulissement ; une troisième position (III) dans laquelle le manche de commande (2) est fixé sur le mécanisme de rail (10) plus près de l'utilisateur ; une quatrième position (IV) dans laquelle le manche de commande (2) s'éloigne de l'utilisateur en faisant coulisser le support (3) depuis la troisième position (III).

11. Mécanisme de commande (1) selon la revendication 2, **caractérisé par** au moins une unité de commande (K) à laquelle sont transférées des données par des câbles s'étendant depuis la première pièce (401), pour l'entrée de mission fournie au manche de commande (2) par l'utilisateur.

12. Mécanisme de commande (1) selon l'une quelconque des revendications précédentes, **caractérisé par** le manche de commande (2), qui est un équipement de capteur électro-optique.

13. Mécanisme de commande (1) selon l'une quelconque des revendications précédentes, **caractérisé par** le manche de commande (2) utilisé pour la console (C) prévue sur l'hélicoptère.

14. Mécanisme de commande (1) selon l'une quelconque des revendications précédentes, **caractérisé par** le support (3) qui peut être fixé à la console (C) après la production du véhicule aérien, le support (3) permettant au manche de commande (2), qui est utilisé pour une entrée de mission externe qui peut être constituée de différents équipements de mission, d'être fixé sur la console (C).
